# EUROPÄISCHE PATENTSCHRIFT

(11) **EP 1 247 676 B1**
(45) Veröffentlichungstag und Bekanntmachung des Hinweises auf die Patenterteilung: **09.03.2005**
(21) Anmeldenummer: 02007325.0
(22) Anmeldetag: 04.04.2002
(51) Int. Cl.: B60J 7/14

(54) **Klappverdeck mit Heckscheibensteuerung**
Foldable top with rear window control
Toit pliant avec commande de vitre arrière

(30) Priorität: 04.04.2001 DE 10116709
(43) Veröffentlichungstag der Anmeldung: 09.10.2002
(73) Patentinhaber: Edscha Cabrio-Dachsysteme GmbH, 94491 Hengersberg (DE)
(72) Erfinder: Obendiek, Klaus, 94032 Passau (DE)
(74) Vertreter: Sparing, Rolf Klaus

(56) Entgegenhaltungen:
- EP-A- 0 835 778
- EP-A- 0 936 095
- DE-A- 4 316 485
- US-A- 5 769 483
- US-A- 5 975 619
- US-A- 6 123 381

## Beschreibung

Die Erfindung betrifft ein Klappverdeck für ein Kraftfahrzeug nach dem Oberbegriff des Anspruchs 1.

Im modernen Cabriolet-Fahrzeugbau werden zunehmend aufwendigere Cabrioletverdecke, die insbesondere als mehrteilige Hartschalen-Klappverdecke ausgebildet sind, eingesetzt. Da solche Klappverdecke nicht nur bei sportlichen Fahrzeugen, sondern auch für herkömmliche Limousinen Anwendung finden, bestehen erhöhte Anforderungen an das Bereithalten eines ausreichenden Kofferraumvolumens auch im geöffneten Verdeckzustand. Ferner werden bei den genannten Cabrioletverdecken zunehmend Heckscheiben aus Glas oder einem harten, transparenten Kunststoff eingesetzt, so daß diese empfindlichen Heckscheiben in einer geöffneten Verdeckstellung in einer besonders geschützten Position abgelegt werden müssen.

DE19642152A1 beschreibt ein Kraftfahrzeug mit einem versenkbaren Dach, welches in ein vorderes, ein mittleres und rückwärtiges Teilstück unterteilt ist, die aus einer gemeinsamen, den Fahrzeuginnenraum überdeckenden Schließstellung in eine Öffnungsstellung unter Ablage in einem heckseitigen Verdeckkasten überführbar sind. Dabei ist eine starre Heckscheibe dem hinteren Dachteilstück zugeordnet, wobei die starre Heckscheibe mittels einer zusätzlichen Antriebsvorrichtung vor einem Öffnungsvorgang des Cabrioletverdecks von dem hinteren Dachteilstück weg abgesenkt wird. Eine solcherart ausgestaltete separate Verschwenkung einer Heckscheibe ist mit erhöhtem Gewicht, erhöhten Kosten und erhöhtem Raumbedarf aufgrund der zusätzlichen Antriebsvorrichtung verbunden.

US 6,123,381 A beschreibt ein öffnungsfähiges Verdeck für ein Kraftfahrzeug mit einem hinteren Dachteil und einem damit gelenkig verbundenem vorderen Dachteil, wobei eine Heckscheibe in einem Gelenk mit dem hinteren Dachteil derart verbunden ist, daß die Heckscheibe in einem geschlossenen Verdeckzustand in dem hinteren Dachteil eingepaßt ist und bei einer Öffnungsbewegung des Verdecks um eine im wesentlichen durch die Mitte der Heckscheibe verlaufende Achse gegenüber dem hinteren Dachteil verschwenkt wird. Dabei wird die Heckscheibe gegenüber dem hinteren Dachteil im wesentlichen um 180° gedreht, so daß die Heckscheibe in einer abgelegten Stellung des Verdecks mit zu dem hinteren Dachteil entgegengesetzter Bombierung angeordnet ist. Die Verschwenkung der Heckscheibe ist mittels einer Verbindung zu einem gegenüber der Heckscheibe bewegbaren Hauptlenker zwangsgesteuert. Bei einer solchen Verschwenkung der Heckscheibe eines öffnungsfähigen Verdecks ist nachteilig, daß die Abdichtung der Heckscheibe gegen das hintere Dachteil auf der Höhe der im wesentlichen mittig durch die Heckscheibe verlaufenden Schwenkachse getrennt ist. Im geschlossenen Verdeckzustand ist die Heckscheibe oberhalb der Schwenkachse hinsichtlich der Abdichtung von innen und unterhalb der Schwenkachse von außen gegen das hintere Dachteil geführt.

DE 43 16 485 A1 beschreibt ein Verdeck für ein Cabriolet-Fahrzeug, bei dem ein hinteres, eine starre Heckscheibe umfassendes Schalenteil und ein weiteres, sich in Fahrtrichtung an das hintere Schalenteil anschließendes Schalenteil so über ein Lenkergetriebe miteinander verbunden sind, daß das hintere Schalenteil bei einer Verdecköffnungsbewegung im wesentlichen unter das weitere Schalenteil parallelverschwenkbar ist.

EP 0 956 990 A2 beschreibt ein öffnungsfähiges Verdeck für ein Kraftfahrzeug mit einem hinteren Dachteil und einem damit gelenkig verbundenem vorderen Dachteil, wobei eine Heckscheibe in einem Gelenk mit dem hinteren Dachteil derart verbunden ist, daß die Heckscheibe in einem geschlossenen Verdeckzustand in dem hinteren Dachteil eingepaßt ist und bei einer Öffnungsbewegung des Verdecks um eine im wesentlichen durch die Mitte der Heckscheibe verlaufende Achse gegenüber dem hinteren Dachteil verschwenkt wird. Dabei wird die Heckscheibe gegenüber dem hinteren Dachteil im wesentlichen um 180° gedreht, so daß die Heckscheibe in einer abgelegten Stellung des Verdecks mit zu dem hinteren Dachteil entgegengesetzter Bombierung angeordnet ist. Bei einer solchen Verschwenkung der Heckscheibe eines öffnungsfähigen Verdecks ist nachteilig, daß die Abdichtung der Heckscheibe gegen das hintere Dachteil auf der Höhe der im wesentlichen mittig durch die Heckscheibe verlaufenden Schwenkachse getrennt ist. Im geschlossenen Verdeckzustand ist die Heckscheibe oberhalb der Schwenkachse hinsichtlich der Abdichtung von innen und unterhalb der Schwenkachse von außen gegen das hintere Dachteil geführt.

Es ist die Aufgabe der Erfindung, ein Klappverdeck für ein Kraftfahrzeug nach dem Oberbegriff des Anspruchs 1 zu schaffen, bei dem eine Heckscheibe ohne eigene Antriebsvorrichtung auf einfache Weise während eines Öffnungsvorgangs des Verdecks in eine geschützte Position verschwenkbar ist.

Diese Aufgabe wird bei dem eingangs genannten Klappverdeck erfindungsgemäß mit den kennzeichnenden Merkmalen des Anspruchs 1 gelöst.

Dabei ist das Heckscheibenteil vorteilhaft in einem geschlossen Verdeckzustand in einer Ausnehmung des hinteren Dachteils des Klappverdecks eingefügt, an diesem hinteren Dachteil oder einem mit diesem verbundenen Hauptlenker angelenkt und mittels eines Lenkergetriebes mit dem zweiten Hauptlenker verbunden, so daß vorteilhaft durch die ohnehin bei einem Öffnungsvorgang des Klappverdecks stattfindenden Bewegungen des Verdeckgestänges für die Ansteuerung des verschwenkbaren Heckscheibenteils genutzt werden und auf weitere Antriebsvorrichtungen verzichtet werden kann.

Besonders vorteilhaft ist weiterhin ein Dachsegment vorgesehen, welches sich in dem geschlossenen Verdeckzustand ebenfalls in die Ausnehmung des hinteren Dachteils einfügt und an dem Lenkergetriebe festgelegt ist. Dadurch kann das Dachsegment bei einer Schließbewegung des Klappverdecks ebenfalls von dem hinteren Dachteil weggeschwenkt werden, so daß durch die Ausnehmung in dem hinteren Dachteil eine abschnittsweise offene Stimseite ausgebildet ist. Dabei wird das Dachsegment bei der Öffnungsbewegung des Verdecks mittels des Lenkergetriebes gegen das Heckscheibenteil bzw. das hintere Dachteil verdreht und in der geöffneten Endstellung raumsparend über dem Heckscheibenteil bzw. dem hinteren Dachteil abgelegt.

In einer vorteilhaften Ausführungsform des erfindungsgemäßen Klappverdecks ist das hintere Dachteil zusammen mit den weiteren Verdeckteilen in einem Heckbereich des Fahrzeugs ablegbar, wobei die offene Stirnseite des hinteren Dachteils im wesentlichen nach unten zeigt, so daß durch die Ausnehmung ein Durchladeraum im Heckbereich des Fahrzeugs ausgebildet ist. Somit wird vorteilhaft durch das Verschwenken des Heckscheibenteils und des Dachsegments zugleich eine geschützte Ablageposition der Heckscheibe und ein vergrößertes Stauraumvolumen im Kofferraumbereich des Fahrzeugs erreicht. Der Durchladeraum bleibt dabei vorteilhaft während der gesamten Bewegung des Klappverdecks erhalten, so daß im Kofferraum zum Transport abgelegte Gegenstände nicht vor dem Öffnen oder Schließen des Verdecks entnommen werden müssen.

In einer besonders vorteilhaften Ausführungsform der vorliegenden Erfindung dienen die beiden Hauptlenker des Klappverdecks auch der Ansteuerung eines mittleren und eines mit diesem über eine Gelenkkette verbundenen vorderen Dachteils. Dabei sind das vordere, das mittlere und das hintere Dachteil im geschlossenen Zustand als Dach über einem Fahrgastraum angeordnet, wobei bei einem zwangsgesteuerten Öffnungsvorgang das vordere Dachteil anhebbar und über das mittlere Dachteil bewegbar sowie die drei Dachteile gemeinsam entgegen einer Fahrtrichtung um ein Hauptlager verschwenkbar ausgeführt sind, wobei das vordere Dachteil und das mittlere Dachteil gleichsinnig über dem in eine umgeklappte Lage drehbaren hinteren Dachteil in eine Packstellung überführbar sind. Vorteilhaft ist dabei zur Vermeidung weiterer beweglicher Verschlußmittel das Dachsegment mittels Zentrierzapfen an dem mittleren Dachteil gesichert, wobei ferner Anschläge vorgesehen sind, mittels derer das Dachsegment und das mittlere Dachteil in einem letzten Abschnitt der Verschlußbewegung des Klappverdecks zueinander geführt werden, so daß die Zentrierzapfen präzise eingreifen.

Um eine besonders vorteilhafte Ansteuerung der Verdeckteile, insbesondere in Bezug auf den Beginn und das Ende der Verdecköffnungsbewegung, zu gewährleisten, ist eine Antriebsvorrichtung vorgesehen, die mittels eines Zwischenlenkers, einer Steuerstange und Kreuzlenkern zum einen eine vorteilhafte Verteilung einer in die Antriebsvorrichtung eingeleiteten Kraft auf die beiden Hauptlenker gewährleistet, und zum anderen ermöglicht, daß zumindest einer der beiden Hauptlenker während der Verdeckbewegung eine Überlagerung aus einer translatorischen Bewegung und einer rotatorischen Bewegung bezüglich eines hauptlagerfesten Drehgelenks vollführt.

Weitere vorteilhafte Ausbildungen und Weiterbildungen eines erfindungsgemäßen Klappverdecks sind der Gegenstand von Unteransprüchen.

Eine Ausführungsform eines erfindungsgemäßen Klappverdecks wird im folgenden unter Bezugnahme auf die zugehöhrigen Zeichnungen näher erläutert.
- Fig. 1: zeigt eine schematische Seitenansicht eines bevorzugten Ausführungsbeispiel eines erfindungsgemäßen Klappverdecks in geschlossener Verdeckstellung;
- Fig. 2: zeigt das Klappverdeck aus Fig. 1 in einem ersten Schritt der Öffnungsbewegung;
- Fig. 3: zeigt das Klappverdeck aus Fig. 1 in einem zweiten Schritt der Öffnungsbewegung;
- Fig. 4: zeigt das Klappverdeck aus Fig. 1 in einer geöffneten Stellung, wobei zur besseren Übersichtlichkeit Teile des Antriebsgestänges nicht gezeigt sind;
- Fig. 5: zeigt eine perspektivische Draufsicht auf das Klappverdeck in seiner Stellung nach Fig. 4 in Blickrichtung des Pfeils P1 in Fig. 4.

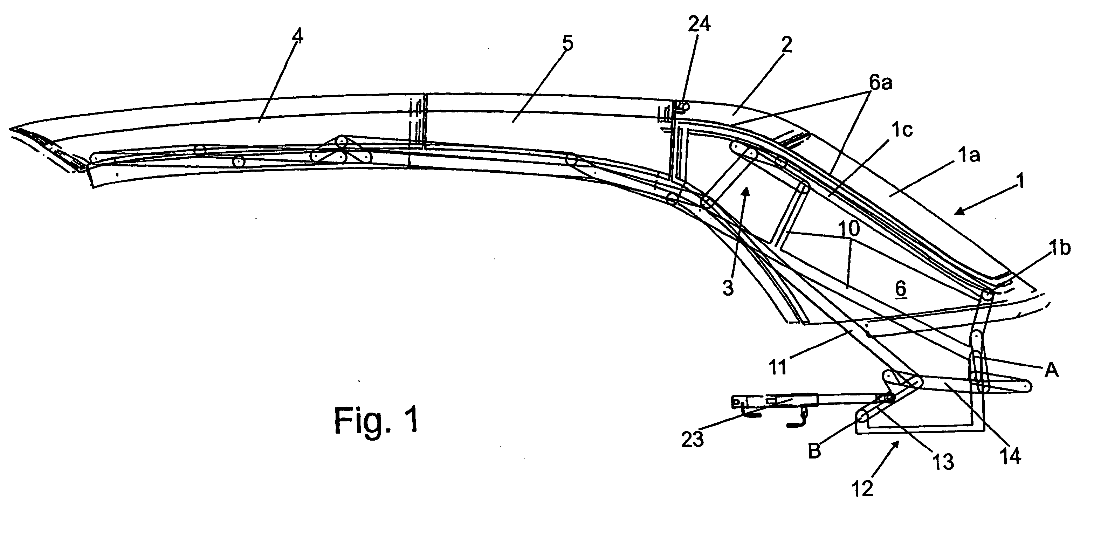

Fig. 1 zeigt ein erfindungsgemäßes Klappverdeck, daß im vorliegenden Ausführungsbeispiel ein vorderes Dachteil 4, ein mittleres Dachteil 5 und ein hinteres Dachteil 6 umfaßt, in einer geschlossenen Verdeckstellung.
An einem karosseriefesten Hauptlager 12 ist ein erster Hauptlenker 10 in einem hauptlagerfesten Drehgelenk A angelenkt. Ein zweiter Hauptlenker 11 ist über einen Zwischenlenker 13 mit dem Hauptlager 12 verbunden, wobei der Zwischenlenker 13 an einem hauptlagerfesten Drehgelenk B schwenkbar festgelegt ist. Ferner sind der Zwischenlenker 13 mit einer Steuerstange 14 und diese mit dem ersten Hauptlenker 10 gelenkig verbunden. Die Verbindung der Steuerstange 14 mit dem ersten Hauptlenker 10 erfolgt dabei über ein Kreuzlenkergetriebe, welches einen ersten Kreuzlenker 14a und einen zweiten Kreuzlenker 14b umfaßt. Dabei sind die Kreuzlenker 14a, 14b jeweils einendig an der Steuerstange 14 und andernendig an dem ersten Hauptlenker 10 im Bereich des ersten hauptlagerfesten Drehgelenks A angelenkt.

Ein Heckscheibenteil 1, welches in einer geschlossenen Verdeckstellung gemäß Fig. 1 in eine Ausnehmung 6a des hinteren Dachteils 6 eingefügt ist, umfaßt eine Heckscheibe 1a sowie einen mit der Heckscheibe 1a fest verbundenen Trägerlenker 1c. Dabei sind unter dem Begriff der Heckscheibe 1a nicht nur eine Glas- oder Kunststoffscheibe, sondern auch die Scheibe einfassende Rahmenteile und Dichtungsmittel verstanden. Der Trägerlenker 1c ist an seinem einen Ende in einem Gelenk 1b an dem ersten Hauptlenker 10 angelenkt. Der erste Hauptlenker 10 ist dabei nach Art einer Stange mit mehreren abzweigenden Streben ausgeformt. Der Trägerlenker 1c ist an seinem anderen Ende über ein Lenkergetriebe 3, umfassend einen ersten Lenker 3a, einen zweiten Lenker 3b sowie einen Steuerlenker 3c mit dem ersten und mit dem zweiten Hauptlenker 10, 11 gelenkig verbunden. Dabei ist der zweite Lenker 3b an dem Trägerlenker 1c und der erste Lenker 3a an dem zweiten Lenker 3b sowie dem ersten Hauptlenker 10 angelenkt. Der Steuerlenker 3c ist mit dem zweiten Hauptlenker 11 und dem ersten Lenker 3a gelenkig verbunden. Insgesamt wird so durch den ersten Hauptlenker 10, den Trägerlenker 1c, den ersten Lenker 3a und den zweiten Lenker 3b ein in der Verdeckstellung gemäß Fig. 1 überschlagenes Viergelenk ausgebildet, welches durch den Steuerlenker 3c angesteuert ist und mit diesem zusammen das Lenkergetriebe 3 ausbildet.

Ein Dachsegment 2 ist mit dem zweiten Lenker 3b des Lenkergetriebes fest verbunden und in der geschlossenen Verdeckstellung gemäß Fig. 1 in die Ausnehmung 6a des hinteren Dachteils 6 eingefügt. Dabei bildet das Dachsegment 2 in diesem eingefügten Zustand einen Teil der zum mittlerem Dachteil 5 gerichteten stirnseitigen Kante des hinteren Dachteils 6. Das hintere Dachteil 6 selbst besteht bedingt durch die Ausnehmung 6a hauptsächlich aus jeweils seitlich am Fahrzeug angeordneten Segmenten, durch die geschlossener Verdeckstellung C-Säulen des Fahrzeug ausgebildet sind. In dem Bereich, in dem das Dachsegment 2 an dem mittleren Dachteil 5 anliegt, sind Zentrierzapfen und Anschläge 24 ausgebildet, so daß das mittlere Dachteil 5 und das Dachsegment 2 in einem letzten Abschnitt einer Schließbewegung des Klappverdecks mittels der Anschläge 24 aneinander geführt und mittels der Zentrierzapfen 24 gesichert werden.

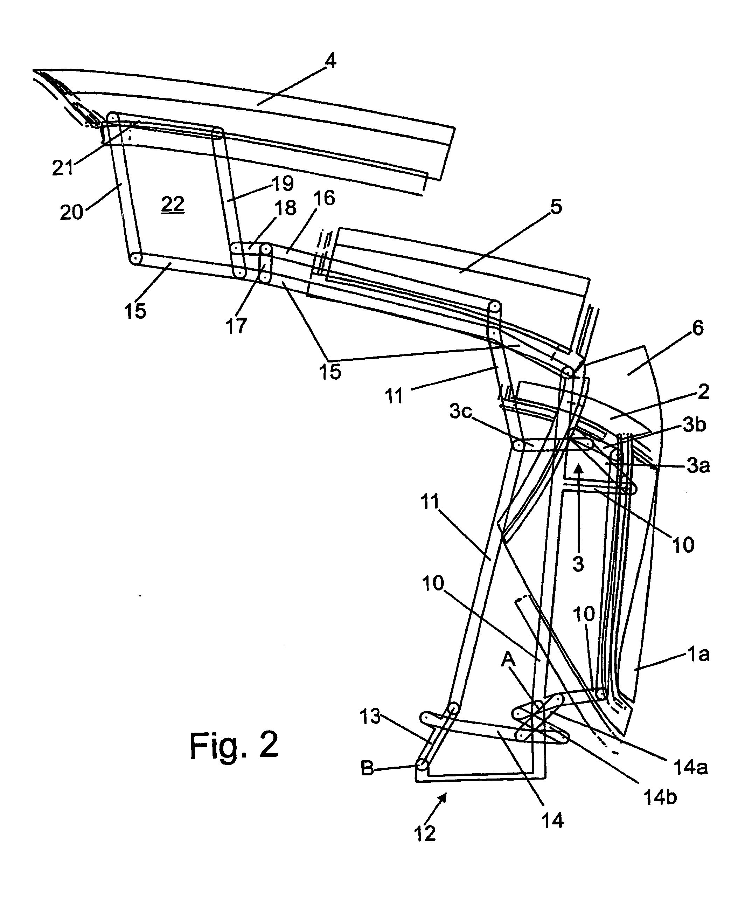

Wie aus Fig. 2 ersichtlich ist, sind die beiden Hauptlenker 10, 11 mittels eines langen Lenkers 15 gelenkig miteinander verbunden, wobei der lange Lenker 15 zugleich das mittlere Dachteil 5 trägt.
Ein mittlerer Steuerlenker 16 ist einerseits mit dem zweiten Hauptlenker 11 und andererseits mit einem Schenkellenker 17 verbunden, wobei der Schenkellenker 17 andernendig mit dem langen Lenker 15 verbunden ist. Ein Zug- und Schublenker 18, welcher ebenfalls mit dem den Schenkellenker 17 und den mittleren Steuerlenker 16 verbindenden Drehgelenk gelenkig verbunden ist, steuert ein das vordere Dachteil 4 tragendes Viergelenk 22 an, wobei das Viergelenk 22 aus zwei Lenkern 19,20, einem vorderen Trägerlenker 21 sowie einem Endbereich des langen Lenkers 15 gebildet wird.
Die Einleitung einer Antriebskraft in das Verdeckgestänge erfolgt im Bereich des Hauptlagers mittels eines an dem Zwischenlenker 13 angelenkten Antriebszylinders 23. Zur besseren Übersichtlichkeit ist der Antriebszylinder 23 lediglich in Fig. 1 gezeigt.

Die Erfindung funktioniert nun wie folgt:

Ausgehend von der geschlossenen Verdeckposition gemäß Fig. 1 führt eine durch den Antriebszylinder 23 ausgeübte Zugkraft zu einem Verschwenken des ersten und des zweiten Hauptlenkers 10, 11 um das Hauptlager in Richtung des Uhrzeigersinns. Bedingt durch die Bewegung des Zwischenlenkers 13 vollzieht der zweite Hauptlenker 11 dabei zugleich eine translatorische Bewegung, die im wesentlichen in seine Längsrichtung erfolgt. In der ersten Verdecköffnungsstellung gemäß Fig.2 sind dabei das hintere Dachteil 6 gegen die Fahrzeugkarosserie in Richtung des Uhrzeigersinns und das mittlere Dachteil 5 gegen das hintere Dachteil 6 entgegen dem Uhrzeigersinn verschwenkt. Das vordere Dachteil 4 befindet sich in einer Verschwenkbewegung über das mittlere Dachteil 5. Erkennbar ist auch das Dachsegment 2 aus der Ausnehmung 6a des hinteren Dachteils 6 herausbewegt, was durch die relative Bewegung des zweiten Hauptlenkers 11 zum ersten Hauptlenker 10 bedingt ist. Das Heckscheibenteil 1 ist in Fig. 2 um das Gelenk 1b entgegen dem Uhrzeigersinn vom hinteren Dachteil 6 weggeschwenkt.

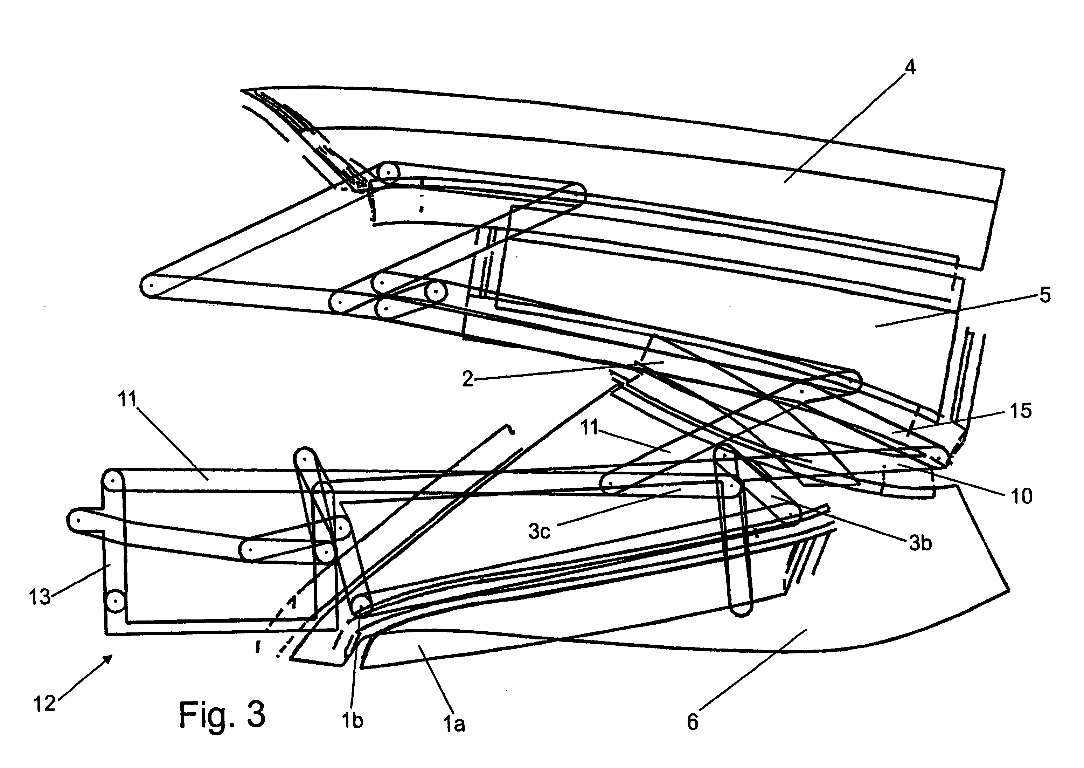

In einem zweiten Schritt der Öffnungsbewegung gemäß Fig. 3 ist bereits eine der Endstellung des Klappverdecks entsprechende Anordnung der einzelnen Verdeckteile erkennbar. Dabei kommt das vordere Dachteil 4 gleichsinnig über dem mittleren Dachteil 5 zu liegen, wobei das vordere sowie das mittlere Dachteil 4, 5 in Fahrtrichtung orientiert über dem entgegen der Fahrtrichtung verschwenkten hinteren Dachteil 6 angeordnet sind. Das Dachsegment 2 ist annähernd in Gegenrichtung zum hinteren Dachteil 6 verschwenkt, und das Heckscheibenteil 1 ist erkennbar von der ihm zugeordneten Ausnehmung 6a im hinteren Dachteil 6 weggeschwenkt.

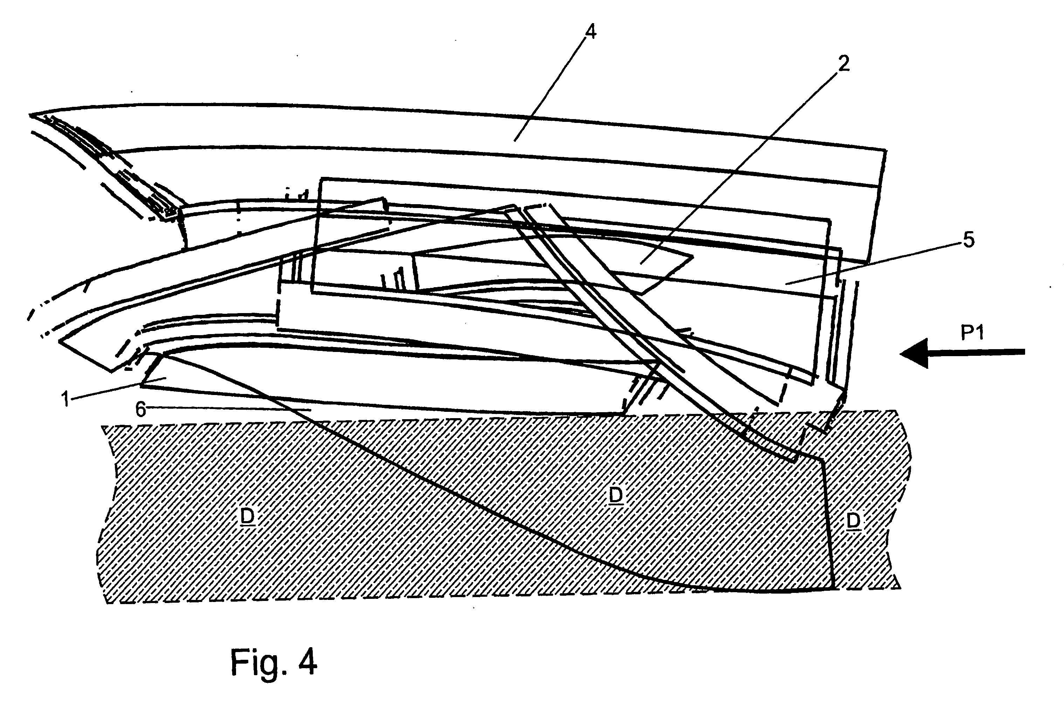

Die endgültige Packstellung des geöffneten Klappverdecks im Heckbereich des Fahrzeugs wird in Fig. 4 verdeutlicht, wobei aus Gründen der besseren Übersichtlichkeit die Gestängeteile nicht gezeigt sind. Erkennbar ist die Anordnung des vorderen Dachteils 4 über dem mittleren Dachteil 5, wobei beide Teile in Fahrtrichtung gerichtet sind über dem entgegen der Fahrtrichtung verschwenkten hinteren Dachteil 6 zu liegen kommen. Das Dachsegment 2 sowie das Heckscheibenteil 1 befinden sich in einer geschützten Position zwischen dem mittleren Dachteil 5 und dem hinteren Dachteil 6.

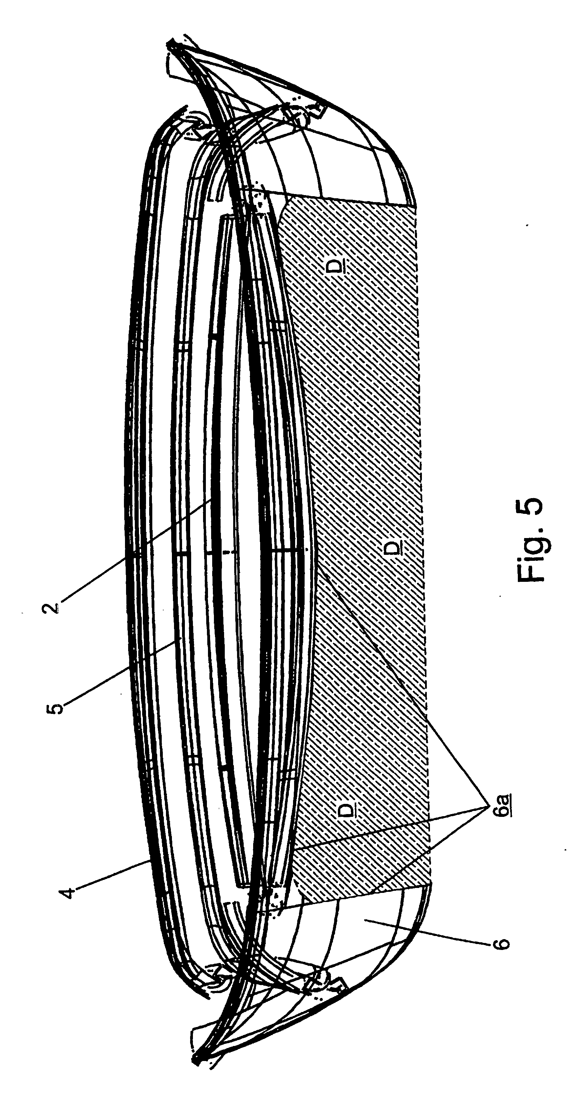

Dadurch bedingt, daß die Ausnehmung 6a im hinteren Dachteil 6 bis zur zum mittleren Dachteil 5 gerichteten Stirnseite des hinteren Dachteils 6 durchgängig ist, ergibt sich in der abgelegten Position gemäß Fig. 4 ein Durchladeraum D, wie insbesondere aus der perspektivischen Draufsicht auf die Ablagestellung befindlichen Dachteile gemäß Fig. 5 ersichtlich wird. Die Querschnittsfläche des genannten Durchladeraums D entspricht dabei der in Fig. 5 dargestellten Querschnittsfläche der Ausnehmung 6a.

## Patentansprüche

1. Klappverdeck für ein Kraftfahrzeug, umfassend
einen ersten und einen zweiten Hauptlenker (10, 11),
ein hinteres Dachteil (6), welches mit dem ersten Hauptlenker (10) verbunden ist, und
ein Heckscheibenteil (1), welches bei einer geschlossenen Verdeckstellung einer Ausnehmung (6a) in dem hinteren Dachteil (6) zugeordnet ist,
wobei das Heckscheibenteil (1) an dem ersten Hauptlenker (10) gelenkig festgelegt ist,
wobei das Heckscheibenteil (1) über ein Lenkergetriebe (3) mit dem zweiten Hauptlenker (11) verbunden ist,
**dadurch gekennzeichnet,**
**daß** die gelenkige Festlegung des Heckscheibenteils (1) an dem ersten Hauptlenker (10) an einem Ende des Heckscheibenteils (1) vorgesehen ist.

2. Klappverdeck nach Anspruch 1, **dadurch gekennzeichnet, daß** die beiden Hauptlenker (10, 11) mit einem karosseriefesten Hauptlager (12) verbunden sind, wobei sie im wesentlichen parallel zueinander um das Hauptlager (12) verschwenkbar sind.

3. Klappverdeck nach Anspruch 1 oder 2, **dadurch gekennzeichnet, daß** das hintere Dachteil (6) fest mit dem ersten Hauptlenker (10) verbunden ist.

4. Klappverdeck nach einem der Ansprüche 1 bis 3, **dadurch gekennzeichnet, daß** ein Dachsegment (2) vorgesehen ist, wobei das Dachsegment (2) mit dem Lenkergetriebe (3) verbunden ist.

5. Klappverdeck nach Anspruch 4, **dadurch gekennzeichnet, daß** das Dachsegment (2) in der geschlossenen Verdeckstellung der Ausnehmung (6a) in dem hinteren Dachteil (6) zugeordnet ist und sich an eine Stirnseite des Heckscheibenteils (1) anschließt.

6. Klappverdeck nach einem der Ansprüche 1 bis 5, **dadurch gekennzeichnet, daß** das Lenkergetriebe (3) einen ersten und einen zweiten Lenker (3a, 3b) sowie einen Steuerlenker (3c) umfaßt.

7. Klappverdeck nach Anspruch 6, **dadurch gekennzeichnet, daß** der erste Lenker (3a) an seinem einen Ende mit dem ersten Hauptlenker (10) und an seinem anderen Ende mit dem einen Ende des zweiten Lenkers (11) gelenkig verbunden ist, **daß** der zweite Lenker (11) mit seinem anderen Ende mit dem Heckscheibenteil (1) gelenkig verbunden ist und **daß** der Steuerlenker (3c) mit seinem einen Ende mit dem zweiten Hauptlenker (11) und mit seinem anderen Ende mit dem ersten Lenker (3a) gelenkig verbunden ist.

8. Klappverdeck nach Anspruch 6 oder 7, **dadurch gekennzeichnet, daß** der erste Lenker (3a), der zweite Lenker (3b), der erste Hauptlenker (10) und das Heckscheibenteil (1) zusammen ein überschlagenes Viergelenk ausbilden.

9. Klappverdeck nach einem der Ansprüche 6 bis 8, **dadurch gekennzeichnet, daß** ein Dachsegment (2) fest mit dem zweiten Lenker (11) verbunden ist.

10. Klappverdeck nach einem der Ansprüche 1 bis 9, **gekennzeichnet durch** eine Antriebsvorrichtung für das Klappverdeck, umfassend das Hauptlager (12), den ersten Hauptlenker (10), den zweiten Hauptlenker (11), einen langen Lenker (15), über den die zum Klappverdeck gerichteten Enden des ersten und zweiten Hauptlenkers (10, 11) gelenkig verbunden sind und ein erstes hauptlagerfestes Drehgelenk (A) zur Anlenkung des ersten Hauptlenkers (10) an dem Hauptlager (12), wobei der zweite Hauptlenker (11) an einem Ende eines Zwischenlenkers (13) angelenkt ist, der Zwischenlenker (50) an einem anderen Ende an einem zweiten hauptlagerfesten Drehgelenk (B) des Hauptlagers (12) angelenkt ist, und wobei eine Steuerstange (14) an ihrem einen Ende an dem Zwischenlenker (13) angelenkt ist und an ihrem anderen Ende im Bereich des ersten hauptlagerfesten Drehgelenks (A) mit dem ersten Hauptlenker (10) verbunden ist.

11. Klappverdeck nach einem der Ansprüche 1 bis 10 umfassend ein vorderes, ein mittleres und das hintere Dachteil (4, 5, 6), die im geschlossenen Zustand als Dach über einem Fahrgastraum angeordnet sind, wobei bei einem zwangsgesteuerten Öffnungsvorgang das vordere Dachteil (4) anhebbar und über das mittlere Dachteil (5) bewegbar sowie die drei Dachteile (4, 5, 6) gemeinsam entgegen einer Fahrtrichtung um das Hauptlager (16) verschwenkbar ausgeführt sind und wobei das vordere Dachteil (4) und das mittlere Dachteil (5) gleichsinnig über dem in eine umgeklappte Lage drehbaren hinteren Dachteil (6) in eine Packstellung überführbar sind.

12. Klappverdeck nach Anspruch 11, **dadurch gekennzeichnet, daß** ein Dachsegment (2) in der geschlossenen Verdeckstellung mittels Zentrierzapfen und Anschlägen (24) an dem mittleren Dachteil (5) geführt und gesichert ist.

13. Klappverdeck nach einem der Ansprüche 1 bis 12, **dadurch gekennzeichnet, daß** durch das hintere Dachteil (6) eine C-Säule des Kraftfahrzeugs ausgebildet ist.

14. Klappverdeck nach einem der Ansprüche 1 bis 13, **dadurch gekennzeichnet, daß** durch die Ausnehmung (6a) in dem hinteren Dachteil (6) eine abschnittsweise offene Stirnseite ausgebildet ist.

15. Klappverdeck nach Anspruch 14, **dadurch gekennzeichnet, daß** das hintere Dachteil (6) in einer geöffneten Verdeckstellung in einem Heckbereich des Fahrzeugs abgelegt ist, wobei die offene Stirnseite des hinteren Dachteils (6) im wesentlichen zum Fahrzeugboden zeigt und wobei durch die Ausnehmung (6a) im hinteren Dachteil (6) ein Durchladeraum (D) im Heckbereich des Fahrzeugs ausgebildet ist.

16. Klappverdeck nach Anspruch 15, **dadurch gekennzeichnet, daß** der Durchladeraum (D) während der gesamten Bewegung des Klappverdecks von der geschlossenen in die geöffnete Verdeckstellung vorhanden ist.

## Claims

1. Folding top for a motor vehicle, comprising
a first and a second main link (10, 11),
a rear roof part (6), which is connected to the first main link (10), and
a rear-window part (1), which is associated with an aperture (6a) in the rear roof part (6) in a closed position of the top,
wherein the rear-window part (1) is fixed in an articulated manner on the first main link (10),
wherein the rear-window part (1) is connected to the second main link (11) by a link mechanism (3),
**characterized in**
**that** the articulated fixing of the rear-window part (1) on the first main link (10) is provided at one end of the rear-window part (1).

2. Folding top according to Claim 1, **characterized in that** the two main links (10, 11) are connected to a main mount (12) fixed to the body, being pivotable essentially parallel to one another about the main mount (12).

3. Folding top according to Claim 1 or 2, **characterized in that** the rear roof part (6) is firmly connected to the first main link (10).

4. Folding top according to one of Claims 1 to 3, **characterized in that** a roof segment (2) is provided, the roof segment (2) being connected to the link mechanism (3).

5. Folding top according to Claim 4, **characterized in that**, in the closed position of the top, the roof segment (2) is associated with the aperture (6a) in the rear roof part (6) and adjoins one end of the rear-window part (1).

6. Folding top according to one of Claims 1 to 5, **characterized in that** the link mechanism (3) comprises a first and a second link (3a, 3b) and a control link (3c).

7. Folding top according to Claim 6, **characterized in that** the first link (3a) is connected in an articulated manner at one end to the first main link (10) and at its other end to one end of the second link (11), that the second link (11) is connected in an articulated manner at its other end to the rear-window part (1), and that the control link (3c) is connected in an articulated manner at one end to the second main link (11) and at its other end to the first link (3a).

8. Folding top according to Claim 6 or 7, **characterized in that** the first link (3a), the second link (3b), the first main link (10) and the rear-window part (1) together form a crossed four-bar linkage.

9. Folding top according to one of Claims 6 to 8, **characterized in that** a roof segment (2) is firmly connected to the second link (11).

10. Folding top according to one of Claims 1 to 9, **characterized by** a driving device for the folding top, comprising the main mount (12), the first main link (10), the second main link (11), a long link (15), via which the ends of the first and second main link (10, 11) which face the folding top are connected in an articulated manner, and a first swivel joint (A), fixed to the main mount, for connecting the first main link (10) pivotally to the main mount (12), the second main link (11) being connected pivotally to one end of an intermediate link (13), the intermediate link (50) being connected pivotally at the other end to a second swivel joint (B), fixed to the main mount, of the main mount (12), and a control rod (14) being connected pivotally at one end to the intermediate link (13) and being connected at its other end to the first main link (10), in the region of the first swivel joint (A), which is fixed to the main mount.

11. Folding top according to one of Claims 1 to 10, comprising a front, a central and the rear roof part (4, 5, 6), which are arranged as a roof over a passenger compartment in the closed state, it being possible, during a positively controlled opening process, for the front roof part (4) to be raised and moved over the central roof part (5), and the three roof parts (4, 5, 6) being embodied in such a way that they can be pivoted together about the main mount (12) counter to a direction of travel, and it being possible to transfer the front roof part (4) and the central roof part (5) in the same direction over the rear roof part (6), which can be rotated into a folded-over position, into a stowing position.

12. Folding top according to Claim 11, **characterized in that** a roof segment (2) is guided and secured on the central roof part (5) by means of centring pins and stops (24) in the closed position of the top.

13. Folding top according to one of Claims 1 to 12, **characterized in that** a C pillar of the motor vehicle is formed by the rear roof part (6).

14. Folding top according to one of Claims 1 to 13, **characterized in that** an end that is open in part is formed by the aperture (6a) in the rear roof part (6).

15. Folding top according to Claim 14, **characterized in that**, in an open position of the top, the rear roof part (6) is deposited in a rear area of the vehicle, the open end of the rear roof part (6) essentially pointing towards the floor of the vehicle, and a through-loading space (D) being formed in the rear area of the vehicle by the aperture (6a) in the rear roof part (6).

16. Folding top according to Claim 15, **characterized in that** the through-loading space (D) is present during the entire movement of the folding top from the closed position into the open position of the top.

## Revendications

1. Capote rabattable pour véhicule automobile, comportant
des premier et deuxième bras principaux (10, 11),
une partie de toit arrière (6) qui est reliée au premier bras principal (10), et
une partie formant lunette arrière (1) qui est associée à un creux (6a) ménagé dans la partie de toit arrière (6),
la partie formant lunette arrière (1) étant fixée de façon articulée au premier bras principal (10),
la partie formant lunette arrière (1) étant reliée au deuxième bras principal (11) par un engrenage de bras (3),
**caractérisée en ce que** la fixation articulée de la partie formant lunette arrière (1) est prévue sur le premier bras principal (10) à une extrémité de la partie formant lunette arrière (1).

2. Capote rabattable selon la revendication 1, **caractérisée en ce que** les deux bras principaux (10, 11) sont reliés à un palier principal (12) fixé à la carrosserie.

3. Capote rabattable selon la revendication 1 ou 2, **caractérisée en ce que** la partie de toit arrière (6) est reliée fixe au premier bras principal (10).

4. Capote rabattable selon l'une des revendications 1 à 3, **caractérisée en ce qu'**il est prévu un segment de toit (2), le segment de toit (2) étant relié à l'engrenage de bras (3).

5. Capote rabattable selon la revendication 4, **caractérisée en ce que**, lorsque la capote est en position fermée, le segment de toit (2) est associé au creux (6) ménagé dans la partie de toit arrière (6) et est raccordé à un côté frontal de la partie formant lunette arrière (1).

6. Capote rabattable selon l'une des revendications 1 à 5, **caractérisée en ce que** l'engrenage de bras (3) comporte des premier et deuxième bras (3a, 3b) ainsi qu'un bras de commande (3c).

7. Capote rabattable selon la revendication 6, **caractérisée en ce que** le premier bras (3) est relié de façon articulée par l'une de ses extrémités au premier bras principal (10) et par son autre extrémité à l'une des extrémités du deuxième bras (11), **en ce que** le deuxième bras (11) est relié de façon articulée par son autre extrémité à la partie formant lunette arrière (1) et **en ce que** le bras de commande (3c) est relié de façon articulée par l'une de ses extrémités au deuxième bras principal (11) et par son autre extrémité au premier bras (3).

8. Capote rabattable selon la revendication 6 ou 7, **caractérisée en ce que** le premier bras (3a), le deuxième bras (3b), le premier bras principal (10) et la partie formant lunette arrière (1) forment ensemble un quadrilatère articulé replié.

9. Capote rabattable selon l'une des revendications 6 à 8, **caractérisée en ce qu'**un segment de toit (2) est relié fixe au deuxième bras (11).

10. Capote rabattable selon l'une des revendications 1 à 9, **caractérisée par** un dispositif d'entraînement de capote rabattable, comportant le palier principal (12), le premier bras principal (10), le deuxième bras principal (11), un long bras (15) permettant de relier de façon articulée les extrémités, dirigées vers le capote rabattable, des premier et deuxième bras principaux (10, 11) et une première articulation tournante (A) qui est fixée au bras principal et qui est destinée à l'articulation du premier bras principal (10) au niveau du palier principal (12), le deuxième bras principal (11) étant articulé au niveau d'une extrémité d'un bras intermédiaire (13), le bras intermédiaire (50) étant articulé par une autre extrémité au niveau d'une deuxième articulation tournante (B) du palier principal (12) auquel elle est fixée, et une barre de commande (14) étant articulée par l'une de ses extrémités au niveau du bras intermédiaire (13) et étant reliée par son autre extrémité au premier bras principal (10) dans la région de la première articulation tournante (A) fixée au palier principal.

11. Capote rabattable selon l'une des revendications 1 à 10, comportant des parties de toit avant, médiane et arrière (4, 5, 6) qui sont disposées à l'état fermé sous la forme d'un toit par-dessus l'espace intérieur de l'automobile, dans lequel, lors d'un processus d'ouverture forcée, la partie de toit avant (4) peut être soulevée et déplacée par-dessus la partie de toit médiane (5) et les trois parties de toit (4, 5, 6) peuvent pivoter ensemble autour du palier principal (16) dans le sens contraire au sens de roulement, et dans lequel la partie de toit avant (4) et la partie de toit médiane (5) pouvent être amenées dans une position de rangement par-dessus la partie de toit arrière (6) apte à tourner dans une position rabattue.

12. Capote rabattable selon la revendication 11, **caractérisée en ce que**, lorsque la capote est fermée, un segment de toit (2) est guidé et immobilisé au moyen de broches de centrage et de butées (24) au niveau de la partie de toit médiane (5).

13. Capote rabattable selon l'une des revendications 1 à 12, **caractérisée en ce qu'**un montant en C du véhicule automobile est réalisé par la partie de toit arrière (6).

14. Capote rabattable selon l'une des revendications 1 à 13, **caractérisée en ce qu'**un côté frontal partiellement ouvert est réalisé par le creux (6a) ménagé dans la partie de toit arrière (6).

15. Capote rabattable selon la revendication 14, **caractérisée en ce que** la partie de toit arrière (6) est rangée dans une région arrière du véhicule lorsque la capote est en position ouverte, le côté frontal ouvert de la partie de toit arrière (6) pointant sensiblement en direction du plancher du véhicule et un espace de chargement (D) étant conformé dans la région arrière du véhicule par le creux (6a) ménagé dans la partie de toit arrière (6).

16. Capote rabattable selon la revendication 15, **caractérisée en ce que** l'espace de chargement (D) est disponible pendant tout le mouvement de la capote rabattable de la position de capote fermée à la position de capote ouverte.
